# EUROPEAN PATENT APPLICATION

(11) **EP 4 033 573 A1**
(43) Date of publication of application: **27.07.2022**
(21) Application number: 22152682.5
(22) Date of filing: 21.01.2022
(51) Int. Cl.: H01M 8/0228, C23C 24/08, H01M 8/12

(54) **WET SPRAYED COATINGS FOR INTERCONNECTS FOR SOEC AND SOFC**

(30) Priority: 21.01.2021 US 202163139907 P; 19.01.2022 US 202217579416
(71) Applicant: Bloom Energy Corporation, San Jose, CA 95134 (US)
(72) Inventor: Armstrong, Tad, San Jose, California 95134 (US); Khurana, Sanchit, San Jose, California 95134 (US); Lu, Zigui, San Jose, California 95134 (US)
(74) Representative: Wichmann, Hendrik

(57) **Abstract**

Systems, devices, and methods that utilize a method of coating an interconnect for a SOEC or SOFC, the method including wet spraying a coating precursor powder onto an interconnect, and sintering the interconnect in an oxidizing ambient to form the coating.

## Description

### PRIORITY INFORMATION

This application claims the benefits of U.S. Provisional Patent Application No. 63/139,907, filed on 21 January 2021, which is incorporated herein by reference in its entirety.

### BACKGROUND OF THE INVENTION

### FIELD OF THE INVENTION

The embodiments of the present invention are generally related to electrolyzer and fuel cell stack components, and more particularly, to interconnects and methods of making interconnects for electrolyzer and fuel cell stacks.

### DISCUSSION OF THE RELATED ART

In general, a solid oxide electrolyzer (SOE) system includes SOE stacks that are comprised of solid oxide electrolyzer cells (SOECs) and metallic interconnects (ICs) that require functional coatings. Similarly, solid oxide fuel cells (SOFC) also include metallic interconnects that require functional coatings.

For example, a typical solid oxide fuel cell stack includes multiple fuel cells separated by metallic interconnects which provide both electrical connection between adjacent cells in the stack and channels for delivery and removal of fuel and oxidant. The metallic interconnects are commonly composed of a Cr based alloy such as an alloy known as CrF which has a composition of 95 wt % Cr-5 wt % Fe or Cr--Fe--Y having a 94 wt % Cr-5 wt % Fe-1 wt % Y composition. The CrF and CrFeY alloys retain their strength and are dimensionally stable at typical SOFC operating conditions, e.g., 700-900 C in both air and wet fuel atmospheres. However, during operation of the SOFCs, chromium in the CrF or CrFeY alloys react with oxygen and form chromia, resulting in degradation of the SOFC stack.

Two of the major degradation mechanisms affecting SOFC stacks are directly linked to chromia formation of the metallic interconnect component: i) higher stack ohmic resistance due to the formation of native chromium oxide (chromia, Cr₂O₃) on the interconnect, and ii) chromium poisoning of the SOFC cathode.

Although Cr₂O₃ is an electronic conductor, the conductivity of this material at SOFC operating temperatures (e.g., 700-900 C) is very low, with values on the order of 0.01 S/cm at 850 C (versus 7.9x10⁴ Scm⁻¹ for Cr metal). The chromium oxide layer grows in thickness on the surfaces of the interconnect with time and thus the ohmic resistance of the interconnect and therefore of the SOFC stack due to this oxide layer increases with time.

The second degradation mechanism related to the chromia forming metallic interconnects is known as chromium poisoning of the cathode. At SOFC operating temperatures, chromium vapor diffuses through cracks or pores in the coating and chromium ions may diffuse through the lattice of the interconnect coating material into the SOFC cathode via solid state diffusion. Additionally, during fuel cell operation, ambient air (humid air) flows over the air (cathode) side of the interconnect and wet fuel flows over the fuel (anode) side of the interconnect. At SOFC operating temperatures and in the presence of humid air (cathode side), chromium on the surface of the Cr₂O₃ layer on the interconnect reacts with water and evaporates in the form of the gaseous species chromium oxide hydroxide, CrO₂(OH)₂. The chromium oxide hydroxide species transports in vapor form from the interconnect surface to the cathode electrode of the fuel cell where it may deposit in the solid form Cr₂O₃. The Cr₂O₃ deposits on and in (e.g., via grain boundary diffusion) the SOFC cathodes and/or reacts with the cathode (e.g., to form a Cr--Mn spinel), resulting in significant performance degradation of the cathode electrode. Typical SOFC cathode materials, such as perovskite materials, (e.g., LSM, LSC, LSCF, and LSF) are particularly vulnerable to the various causes chromium oxide degradation.

### SUMMARY OF THE INVENTION

Accordingly, the embodiments of the present invention are directed to wet sprayed coatings for interconnects for SOEC and SOFC that substantially obviates one or more problems due to limitations and disadvantages of the related art.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the wet sprayed coatings for interconnects for SOEC and SOFC includes systems, devices, and methods for coating an interconnect for a SOEC or SOFC comprising wet spraying a coating precursor powder onto an interconnect, and sintering the interconnect in an oxidizing ambient to form the coating.

In another aspect, the wet sprayed coatings for interconnects for SOEC and SOFC includes systems, devices, and methods for coating an interconnect for a SOEC or SOFC comprising adding a metal powder to a manganese cobalt oxide to form a coating material, wet spraying the coating material onto an interconnect, and sintering the interconnect in an oxidizing ambient to form the coating.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1A is a perspective view of a SOFC stack according to various embodiments of the present invention.
FIG. 1B is a cross-sectional view of a portion of the stack of FIG. 1A according to various embodiments of the present invention.
FIG. 2 illustrates a cross-sectional view of an interconnect according to various embodiments of the present invention.
FIG. 3 illustrates a method of coating an interconnect according to various embodiments of the present invention.
FIGs. 4A-4D illustrate micrograph cross-sections of interconnect coatings after sintering according to various embodiments of the present invention.
FIGs. 5A-5B illustrate micrograph cross-sections of interconnect coatings after sintering according to various embodiments of the present invention.

### DETAILED DESCRIPTION OF THE INVENTION

Reference will now be made in detail to the embodiments of the present invention, examples of which are illustrated in the accompanying drawings. Wherever possible, like reference numbers will be used for like elements.

Currently, an air plasma spray (APS) coating provides good results to reduce interconnect degradation. For example, the coating material may be applied using a spray method, such as an air plasma spray (APS), or may be applied using a coating method, such as a wet coating method using a coating material ink. The APS process is a thermal spray process in which powdered coating materials are fed into the coating apparatus. The coating particles are introduced into a plasma jet in which they are melted and then accelerated toward the substrate. On reaching the substrate, the molten droplets flatten and cool, forming the coating. The plasma may be generated by either direct current (DC plasma) or by induction (RF plasma). Further, unlike controlled atmosphere plasma spraying (CAPS) which requires an inert gas or vacuum, air plasma spraying is performed in ambient air. Despite some advantages, APS methods are less desirable due to their high cost.

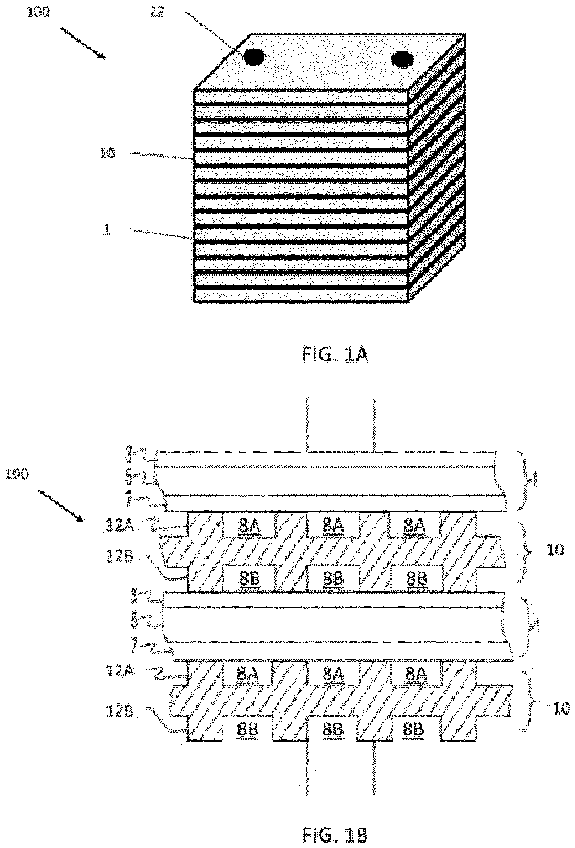

FIG. 1A is a perspective view of a solid oxide fuel cell (SOFC) stack 100, and FIG. 1B is a cross-sectional view of a portion of stack 100, according to various embodiments of the present invention. Although an SOFC stack is used as an example, the embodiments of the present invention are further applicable to SOE/SOEC systems and any other components that include an interconnect 10.

As illustrated in FIGs. 1A and 1B, stack 100 includes fuel cells 1 separated by interconnects 10. As illustrated in FIG. 1B, each fuel cell 1 includes a cathode electrode 3, a solid oxide electrolyte 5, and an anode electrode 7.

Various materials may be used for cathode electrode 3, electrolyte 5, and anode electrode 7. For example, anode electrode 3 may include a cermet comprising a nickel containing phase and a ceramic phase. The nickel containing phase may consist entirely of nickel in a reduced state. This phase may form nickel oxide when it is in an oxidized state. Thus, anode electrode 7 is preferably annealed in a reducing atmosphere prior to operation to reduce the nickel oxide to nickel. The nickel containing phase may include other metals in additional to nickel and/or nickel alloys. The ceramic phase may include a stabilized zirconia, such as yttria and/or scandia stabilized zirconia and/or a doped ceria, such as gadolinia, yttria and/or samaria doped ceria.

Electrolyte 5 may include a stabilized zirconia, such as scandia stabilized zirconia (SSZ) or yttria stabilized zirconia (YSZ). Alternatively, the electrolyte may include another ionically conductive material, such as a doped ceria.

The cathode electrode 3 may include an electrically conductive material, such as an electrically conductive perovskite material, such as lanthanum strontium manganite (LSM). Other conductive perovskites, such as LSCo, etc., or metals, such as Pt, also may be used. The cathode electrode 3 also may contain a ceramic phase similar to the anode electrode 7. The electrodes and the electrolyte may each include one or more sublayers of one or more of the above-described materials.

Fuel cell stacks, such as stack 100, are frequently built from a plurality of SOFCs 1 in the form of planar elements, tubes, or other geometries. Although the fuel cell stack illustrated in FIG. 1 is vertically oriented, fuel cell stacks may be oriented horizontally, or in any other direction. Fuel and air may be provided to the electrochemically active surface. For example, fuel may be provided through fuel conduits 22 (e.g., fuel riser openings) formed in each interconnect 10.

Each interconnect 10 electrically connects adjacent fuel cells 1 within stack 100. In particular, interconnect 10 may electrically connect anode electrode 7 of one fuel cell 1 to cathode electrode 3 of an adjacent fuel cell 1. FIG. 1B illustrates a lower fuel cell 1 that is disposed between two interconnects 10. A Ni mesh may be used to electrically connect interconnect 10 to anode electrode 7 of an adjacent fuel cell 1.

Each interconnect 10 includes fuel-side ribs 12A that at least partially define fuel channels 8A and air-side ribs 12B that at least partially define oxidant (e.g., air) channels 8B. Interconnect 10 may operate as a gas-fuel separator that separates a fuel, such as a hydrocarbon fuel, flowing to the fuel electrode (i.e., anode 7) of one cell in the stack from oxidant, such as air, flowing to the air electrode (i.e., cathode 3) of an adjacent cell in the stack. At either end of stack 100, there may be an air end plate or fuel end plate (not shown) for providing air or fuel, respectively, to the end electrode.

Each interconnect 10 may be made of or may contain electrically conductive material, such as a metal or metal alloy (e.g., chromium-iron alloy) which has a similar coefficient of thermal expansion to that of the solid oxide electrolyte in the cells (e.g., a difference of 0-10%). For example, interconnects 10 may include a metal or metal alloy (e.g., a chromium-iron alloy, such as 4-6 weight percent iron, optionally 1 or less weight percent yttrium and balance chromium alloy), and may electrically connect the anode or fuel-side of one fuel cell 1 to the cathode or air-side of an adjacent fuel cell 1. An electrically conductive contact layer, such as a nickel contact layer, may be provided between anode electrodes 7 and each interconnect 10. Another optional electrically conductive contact layer may be provided between the cathode electrodes 3 and each interconnect 10.

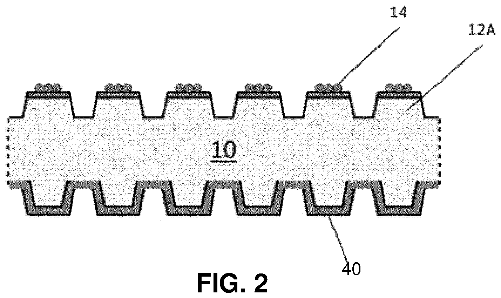

FIG. 2 illustrates a cross-sectional view of an interconnect 10 according to various embodiments of the present invention. As illustrated in FIG. 2, interconnect 10 includes a plurality of ribs 12A, and an optional contact layer 14 disposed on the tips of ribs 12A of interconnect 10.

As further illustrated in FIG. 2, a coating material may be applied to the air side of interconnect 10, prior to the sintering, to form a protective coating layer 40. As discussed below, the methods for forming coating layer 40 may include sintering of interconnect 10. In some instances, the sintering may result in partial inter-diffusion of the interconnect material and the iron of optional contact layer 14. Coating layer 40 and optional contact layer 14 may be sintered at the same time.

Coating materials may include, for example, the following spinel compositions comprising oxides of at least two (e.g., two or three) metals selected from Cu, Mn, Co, Fe and/or Ni, such as Cu_{1.3}Mn_{1.7}O₄, MnCu_{0.5}Co_{1.5}O₄, MnCo_{1.7}Fe_{o.3}O₄, CoFe₂O₄, MnCo_{1.7}Cu_{o.3}O₄, Mn_{1.4}Co_{1.4}Cu_{0.2}O₄, Cu_{0.77}Ni_{0.45}Mn_{1.78}O₄ and NiCo₂₋ₓFeₓO₄, for example. The materials selection is driven by balancing the electronic conductivity of the spinel, the vapor pressure of the starting oxides, and the sinterability of the material. It is believed that the air-oxidized coating does not need to be fully dense to be effective in suppressing chromium evaporation and native chromium oxide formation under the coating. This is even truer in the case of SOECs in which the anode reaction takes place in the air stream and is less susceptible to chromium poisoning due to the oxidation reaction at the three-phase boundary.

Interconnects, such as interconnect 10, are made by a powder metallurgy process. After compressing and sintering a metal powder, at high temperature and in hydrogen, conventional interconnects are still not fully dense. Accordingly, the interconnects are oxidized to fill-in remaining pores. With conventional methods, the interconnects are grit blasted to remove a portion of the oxidized layer. Both the oxidation and grit-blast add additional cost. By applying the embodiments of the invention, interconnect 10 does not require an initial oxidation step and grit-blast. Instead, a wet spray coating precursor powder is applied to interconnect 10. Subsequently, interconnect 10 having the applied wet spray is oxidized. In some embodiments, interconnect 10 having the applied wet spray is oxidized in the stack (e.g., stack 100). In some embodiments, interconnect 10 is already sintered and subsequently oxidized after wet spray is applied.

According to the various embodiments of the present invention, a SOE or SOFC interconnect coating process uses a wet spray and in-situ stack sintering. This process reduces the cost of the interconnect coating and enables high volume manufacturing. The wet spray coating method is more efficient than APS, eliminates the need for grit blasting surface preparation of the interconnect, and allows the interconnect oxidation step to take place in-situ for the SOFC and/or SOEC stack.

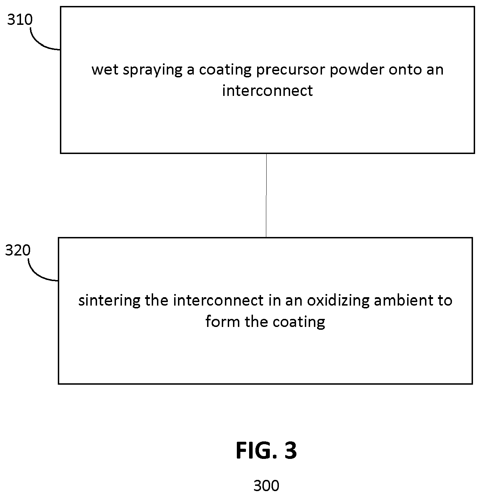

FIG. 3 illustrates a method 300 of coating an interconnect according to various embodiments of the present invention.

At 310, a wet spraying step includes applying a precursor powder in a fluid carrier (e.g., a suspension or mixture of powder in a fluid solvent with an optional binder) to the interconnect. For example, a metal powder suspended into an ink may be used, such as a metal powder including Mn, Co, Cu, Fe, Ni, combinations thereof, alloys thereof, etc. Next, at 320, a wet spray coating process for the interconnect is followed by an oxidizing ambient (e.g., air) oxidation/sintering step to provide a functional interconnect without requiring a high cost reduction annealing step in a reducing ambient (e.g., hydrogen ambient). Applying any of a variety of metals, an alloys, combinations of metal powders, when exposed to ambient air oxidizes and sinters at the same time to produce a dense coating layer (e.g., coating layer 40) that results from volumetric expansion of the applied metal(s).

In the various embodiments, and for example, the wet sprayed coating materials utilize an oxidation step to react the coating material with the surface of a chrome-based interconnect (e.g., a chromium - iron alloy containing 4 to 6 volume percent iron and balance chromium). The interconnects may include alloy plates having ribs separated by flow channels on the cathode and anode facing sides, as described above. The interconnects also may optionally include fluid riser openings and/or fluid flow plenums.

Coating materials may include the following spinel compositions comprising oxides of at least two (e.g., two or three) metals selected from Cu, Mn, Co, Fe and/or Ni, such as Cu_{1.3}Mn_{1.7}O₄, MnCu_{0.5}Co_{1.5}O₄, MnCo_{1.7}Fe_{0.3}O₄, CoFe₂O₄, MnCo_{1.7}Cu_{0.3}O₄, Mn_{1.4}Co_{1.4}Cu_{0.2}O₄, Cu_{0.77}Ni_{0.45}Mn_{1.78}O₄ and NiCo₂₋ₓFeₓO₄. The materials selection is driven by balancing the electronic conductivity of the spinel, the vapor pressure of the starting oxides, and the sinterability of the material. In some instances, the air-oxidized coating does not need to be fully dense to be effective in suppressing chromium evaporation and native chromium oxide formation under the coating. This is even truer in the case of SOEC wherein the anode reaction takes place in the air stream and is less susceptible to chromium poisoning due to the oxidation reaction at the three-phase boundary.

In some embodiments, blends of elemental metal powders (i.e., not alloys) are deposited onto interconnect substrates. Here, the interconnect, including the blends of elemental metal powders, undergo a thermal process in order to oxidize the metals into metal oxides. The starting metal powders include Ni, Fe, Mn, Co, and Cu with nominal particle sizes ranging from 0.3 to 10um, with d50 on the order of 2-3um, for example. Inks comprised of one or more powders may be formulated with solids loadings of 10-40% and applied to the substrate with an ultrasonic spray nozzle. The process may include one or more coating applications (e.g., 1 to 10 coating applications), with a drying step in between (or after) each coating application. Drying may be done in-situ with the built-in heating plate, or the coated interconnects may be dried in an external oven/furnace. In mass production embodiments, interconnects move on a conveyor belt through a series of spray stations and inline drying ovens/furnaces. After drying, the interconnects are subjected to a thermal treatment of approximately 940C-950C for 1hr-5hr, but also may be approximately 800C-1000C for differing times of 0.5hrs-6hrs, in an air atmosphere.

Other known wet coating processes require an N₂, H₂, or N₂/H₂ atmosphere in order to densify the coating, however, the embodiments of the present invention utilize ambient air. In the embodiments of the present invention, ambient air suffices and is beneficial due to its low cost.

During the thermal processing the metal powders oxidize to metal oxides and form an oxide coating on the interconnect. It is the volumetric expansion of the metal to metal oxide that fills the pores (e.g., voids, gaps, and open spaces) to form a semi-dense coating without connected open porosity. For example, in the case of a 50%Fe-50%Mn powder blend, upon oxidation the Fe likely first oxidizes to a FeOₓ (FeO, Fe₂O₃, Fe₃O₄) with substantial larger specific volume, and likewise the Mn oxidizes to MnOₓ (MnO, Mn₂O₃, Mn₃O₄), also with a larger specific volume. With time at temperature, the Fe-oxides and the Mn-oxides inter-diffuse to form other oxides such as Fe-Mn-O spinels such as MnFe₂O₄ or (Mn,Fe)₃O₄. The final coating is not necessarily single phase but consists of mixes of oxides FeₓMn_{y}O_{z} with areas rich in Fe or Mn, and some spinel phases.

To form conductive spinel phases, several transition metal powder blends have been investigated, including the binary, ternary, or even quaternary combinations of Ni, Fe, Mn, Co, and Cu metal powders. Some examples include, but not limited to, Mn-Fe, Mn-Co, Ni-Fe, Ni-Co, Cu-Mn, Mn-Co-Fe, Mn-Co-Cu, Ni-Mn-Co, Ni-Mn-Fe, and Mn-Co-Fe-Cu. The percentage of each metal may range from 2 to 95% and the particle size of d50 is preferred to be from 0.3 to 10 µm, more preferred to be from 0.3 to 3 µm. The shape of the metal powders may be spherical, rod shaped or irregular.

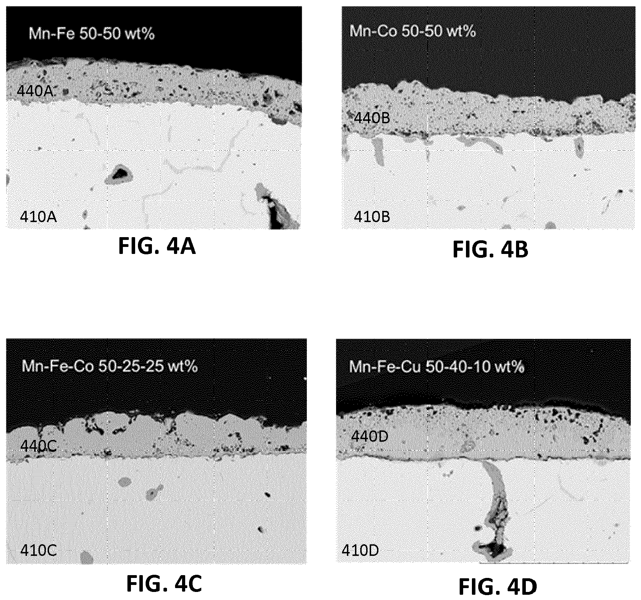

FIGs. 4A-4D illustrate micrograph cross-sections of interconnect coatings after sintering according to various embodiments of the present invention. FIG. 4A illustrates a Mn-Fe 50-50 wt% coating 440A on interconnect 410A; FIG. 4B illustrates a Mn-Co 50-50 wt% coating 440B on interconnect 410B; FIG. 4C illustrates a Mn-Fe-Co 50-25-25 wt% coating 440C on interconnect 410C; and FIG. 4D illustrates a Mn-Fe-Cu 50-40-10 wt% coating 440D on interconnect 410D. As illustrated by FIGs. 4A-4D, respective coatings 440A-440D achieve at least a semi-dense coating without connected open porosity, or a dense coating with closed porosity.

To make the various coatings, a slurry is prepared by thoroughly mixing the metal powders, an organic solvent, a dispersant, and an optional organic binder. The solids loading is between 10 and 40%, preferably between 20 and 30%; the dispersant is about 0.1 to 5%, and the optional binder is about 2 to 10%. The mixing is done by stirring, shaking, or ball milling. The slurry is then sprayed on the surface of the interconnect at a substrate temperature between 20C to 200C. One or more coating runs with drying in between (or after) may be used to form the desired coating thickness. The interconnect with the applied coating is then sintered at 950C for 5 hours in air, for example.

In another embodiment, another coating process has been developed wherein a metal powder is added to an oxide powder in order to promote a dense coating. The phase MCO (manganese cobalt oxide) is a coating material for SOEC and SOFC interconnects; however, it is difficult to densify an MCO coating applied by wet spray followed by thermal processing in only ambient air. Here, a metal powder is added, such as Fe, Mn, Ni, Co, or Cu, to an MCO powder to act as a sintering aid. The volumetric expansion of the metal to metal oxide during the thermal processing in air helps fill the pores (e.g., voids, gaps, and open spaces) that are located between the partially sintered MCO powder. Alternatively, the oxidation of the metal powder facilitates the inter-diffusion and therefore enhances the sintering of the coating. An MCO powder, such as the composition Mn_{1.5}Co_{1.5}O₄ may be used; however, any (MnₓCo₁₋ₓ)₃O₄ (e.g., 0 ≤ x ≤ 1), such as Mn₂CoO₄, Mn_{1.5}Co_{1.5}O₄, Co₂MnO₄ is suitable. The blend of metal and MCO may range from 5% to 95% metal, for example 50%Fe-50%MCO.

Also considered was MCO mixed with more than one metal, for example 50%Ni_{0.9}Fe_{2.1}-50%MCO, which is actually 50% (30%Ni-70%Fe)-50%MCO, or 15%Ni-35%Fe-50%MCO. The starting powder size of the MCO ranged from 1-30um, but in some cases was milled to 0.5-3um. For some coatings, the MCO was milled before blending with the metal powder and formulated into an ink, in other cases the MCO and metal powders were milled together and made into an ink. As described above, the MCO-Fe ink is deposited onto the interconnect by a spray process, with one or more coating and subsequent drying steps, and then processed at 940C-950C for 1hr 5hr in an air atmosphere, for example. MCO plus metal powder may be used, for example. Other oxides including perovskites such as LSM, LSC, and LSCF may be used for example. Spinels including NiFe₂O₄, Cu₂MnO₄, and Cu_{1.5}Mn_{1.5}O₄ also may be used, for example.

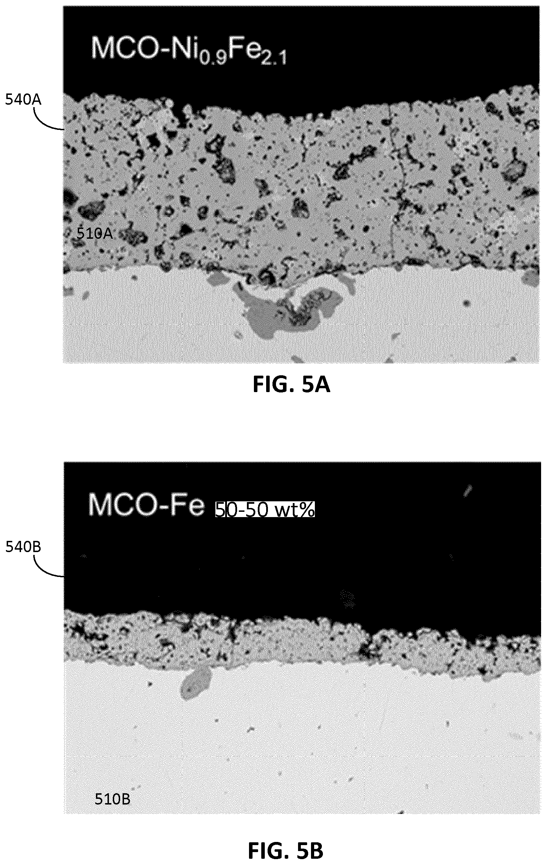

FIG. 5 illustrates micrograph cross-sections of interconnect coatings after sintering according to various embodiments of the present invention. FIG. 5A illustrates a MCO-Ni_{0.9}Fe_{2.1} coating 540A on interconnect 510A, and FIG. 5B illustrates a MCO-Fe coating 540B on interconnect 510B. As illustrated by FIGs. 5A-5B, respective coatings 540A-540B achieve at least a semi-dense coating without connected open porosity, or a dense coating with closed porosity.

In the various embodiments described herein, the wet spray coating process, such as method 300, is beneficial as compared to the APS coating process. In comparing wet spray to APS, the powder usage or powder efficiency of wet spray may be greater than approximately 80% compared to less than approximately 20% for APS, leading to less wasted material and reduced cost. Furthermore, APS coatings rely on mechanical bonding and thus require surface preparation and roughening, while the wet spray coatings may be applied to smooth surfaces since the materials inter-diffuse with the interconnect alloy and native forming oxide to form a chemical bond, thus eliminating the need for grit blasting. This difference of not requiring grit blasting, along with the oxidation step to react the wet spray coating, results in embodiment that integrating the coating process into the stack/interconnect fabrication process. For example, a sintered interconnect compact that is shiny and not oxidized, may be subsequently coated by the wet spray process, assembled into the stack, and then the coating and interconnect oxidation steps may take place in-situ in the stack during the stack sintering step required to set the seals, which is described, for example in U.S. Patent 9,065,127 B2, issued on June 23, 2015, and incorporated herein by reference in its entirety. The embodiment process eliminates oxidation of individual interconnects in a furnace, eliminates grit blasting, and eliminates the need for a separate coating oxidation step post wet spray.

The wet spray coating process, such as method 300, significantly reduces the cost of the coating process itself as well as reduces the cost of the interconnect component by the synergistic properties of stack sintering. The substitution of the APS process with the more efficient and higher powder yielding wet spray process is expected to reduce the materials cost of the coating by 60%. Furthermore, the elimination of the grit blast process further reduces the total coating cost by 30%, and combined with the lower material usage, the total coating cost is reduced by 50%. The combining of the interconnect oxidation step with the stack sintering steps eliminates one whole process in the interconnect fabrication sequence. The combined savings of less powder usage, in-situ stack sintering, and elimination of grit blasting reduces the cost of the final coated interconnect component by over 25%.

The wet spray process, such as method 300, may be used to coat the interconnects for either SOEC or SOFC stacks or any other component that utilizes an interconnect, such as interconnect 10. The interconnects may be coated on their cathode or anode side surfaces (e.g., air and/or fuel side surfaces).

It will be apparent to those skilled in the art that various modifications and variations may be made in the wet sprayed coatings for interconnects for SOEC and SOFC of the present invention without departing from the spirit or scope of the invention. Thus, it is intended that the present invention cover the modifications and variations of this invention provided they come within the scope of the appended claims and their equivalents.

## Claims

1. A method of coating an interconnect for a solid oxide electrolyzer cells (SOECs) or solid oxide fuel cells (SOFCs), the method comprising:
wet spraying a coating precursor powder onto an interconnect; and
sintering the interconnect in an oxidizing ambient to form the coating.

2. The method according to claim 1, wherein the precursor powder comprises a spinel precursor powder comprising at least two metals selected from Cu, Mn, Co, Fe and/or Ni.

3. The method according to claim 2, wherein the coating comprises an oxide of at least two metals selected from Cu, Mn, Co, Fe and/or Ni.

4. The method according to claim 3, wherein the sintering occurs in-situ in a stack of SOECs or SOFCs.

5. The method according to claim 1, wherein the interconnect comprises a chromium - iron alloy containing a spinel coating containing an oxide of at least one of Cu, Fe or Ni.

6. The method according to claim 5, wherein the coating further comprises at least one of Mn or Co.

7. The method according to claim 1, wherein the coating has a semi-dense coating without connected open porosity.

8. The method according to claim 1, wherein the coating has a dense coating with closed porosity.

9. The method according to claim 1, wherein the oxidizing ambient is air.

10. The method according to claim 1, wherein the sintering occurs in-situ in the SOFC or SOEC stack.

11. The method according to claim 1, wherein the wet spraying the coating to the interconnect is applied after the interconnect is sintered and without oxidizing, the interconnect subsequently being sintered, the oxidizing ambient being air.

12. The method according to claim 11, wherein the sintering occurs in-situ in the SOFC or SOEC stack.

13. The method according to claim 1, wherein the wet spraying the coating to the interconnect is applied after the interconnect is sintered and without grit blasting, the interconnect subsequently being sintered, the oxidizing ambient being air.

14. The method according to claim 1, wherein the interconnect and the coating are sintered at the same time either as a component or in-situ in the SOFC or SOEC stack.

15. A method of coating an interconnect for a solid oxide electrolyzer cells (SOECs) or solid oxide fuel cells (SOFCs), the method comprising:
adding a metal powder to a manganese cobalt oxide to form a coating material; wet spraying the coating material onto an interconnect; and
sintering the interconnect in an oxidizing ambient to form the coating.

16. The method according to claim 15, where the metal powder that is added is one of Fe, Mn, Ni, Co, or Cu.

17. The method according to claim 16, where the metal powder that is added is a sintering aid.

18. The method according to claim 16, wherein the coating has a semi-dense coating without connected open porosity.

19. The method according to claim 16, wherein the coating has a dense coating with closed porosity.

20. The method according to claim 16, wherein the oxidizing ambient is air.
